# EUROPEAN PATENT SPECIFICATION

(11) **EP 2 366 678 B1**
(45) Date of publication and mention of the grant of the patent: **29.07.2020**
(21) Application number: 11250279.4
(22) Date of filing: 10.03.2011
(51) Int. Cl.: C04B 41/85, F01D 5/28

(54) **High tolerance controlled surface for ceramic matrix composite component**
Oberfläche mit großer Toleranz für Keramikmatrix-Verbundstoffkomponente
Surface contrôlée haute tolérance pour composant composite de matrice céramique

(30) Priority: 12.03.2010 US 722899
(43) Date of publication of application: 21.09.2011
(73) Proprietor: United Technologies Corporation, Farmington, CT 06032 (US)
(72) Inventor: Jarmon, David C., Kensington Connecticut 06037 (US); Bhatia, Tania, Middletown Conecticut 06457 (US); Lozyniak, Steven, South Windsor Conecticut 06074 (US)
(74) Representative: Dehns

(56) References cited:
- EP-A1- 1 676 824
- US-A1- 2006 280 955
- US-B1- 6 265 078

## Description

### BACKGROUND

The subject of this disclosure was made with government support under Contract No.: N00014-06-C-0585 awarded by the Navy. The government therefore may have certain rights in the disclosed subject matter.

This disclosure generally relates to a process for creating a desired surface finish and dimension for a ceramic matrix composite component.

A ceramic matrix composite includes a fibre reinforcement layer saturated with ceramic material. The ceramic matrix composite is utilized to provide desirable mechanical and thermal properties. Typical ceramic matrix components provide thermal properties that are favourable for high temperature environments. The fibre reinforcement layer provides desired mechanical properties and improves durability. Including the fibre reinforcement layer further improves the durability properties of the ceramic matrix composite as compared to a purely ceramic component. The fibre reinforcement layer while improving the durability of the ceramic component contributes to the creation of rough surface finishes and inconsistent dimensional control. EP 1 676 824 A relates to a method of producing a ceramic matrix composite article. US 6 265 078 B relates to an erosion-resistant coating on the surface of a fiber reinforced ceramic matrix composite. US 2006/280955 A relates to environmental barrier coatings deposited by thermal spraying on ceramic matrix composite substrates.

### SUMMARY

A disclosed ceramic matrix composite (CMC) component includes a hardenable material applied to a surface of the CMC such that at least a portion of the CMC can be machined to provide a desired dimension and surface finish.

The example disclosed process includes the application of a hardenable silicon material to areas where a precise dimensional tolerance is desired. The hardenable material can then be machined to provide the desired geometry within acceptable dimensional tolerances.

Accordingly, the example process provides for the use of CMC components in an increased range of applications that require dimensional tolerances beyond those consistently obtained with CMC material fabrication processes.

These and other features disclosed herein can be best understood from the following specification and drawings, the following of which is a brief description.

### BRIEF DESCRIPTION OF THE DRAWINGS

Figure 1 is a schematic view of an example gas turbine engine including an example ceramic matrix composite component.
Figure 2 is a schematic view of an example ceramic matrix composite component.
Figure 3 is a schematic view of an example ceramic matrix composite component held in place by a support member.
Figure 4 is a schematic view of a method of forming a ceramic matrix composite component.

### DETAILED DESCRIPTION

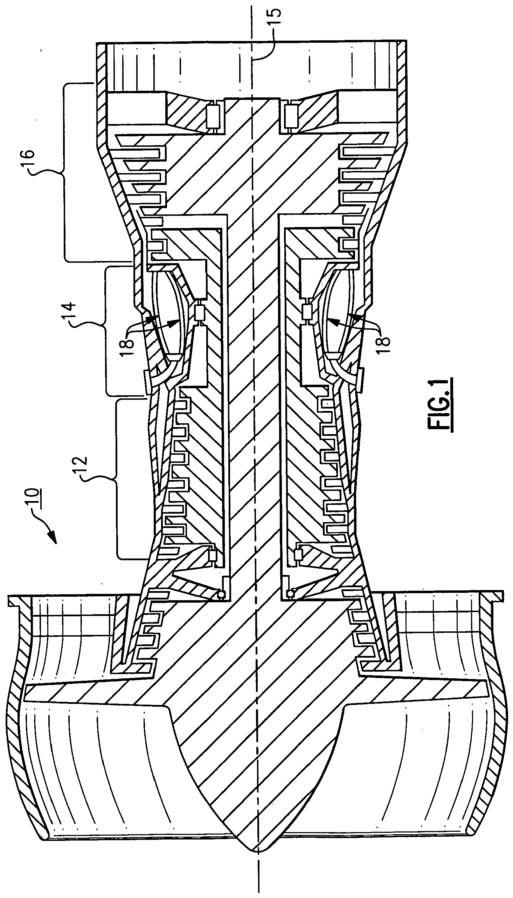

Referring to Figure 1, a gas turbine engine 10 includes a compressor section 12 that feeds compressed air to a combustor 14. In the combustor 14, the compressed air is mixed with fuel and ignited to generate a stream of hot gases. The generated stream of hot gases drive a turbine section 16 that in turn drives the compressor section 12. The combustor 14 includes an inner liner 18 that is formed and configured to endure the high temperatures produced during combustion.

The example liner 18 is formed from a ceramic matrix composite material that provides the desired favourable thermal properties. As appreciated, the illustrated gas turbine engine 10 is one of many known gas turbine engine configurations that will benefit from the following disclosure. The example liner 18 includes different components exposed to the extreme temperatures generated during combustion.

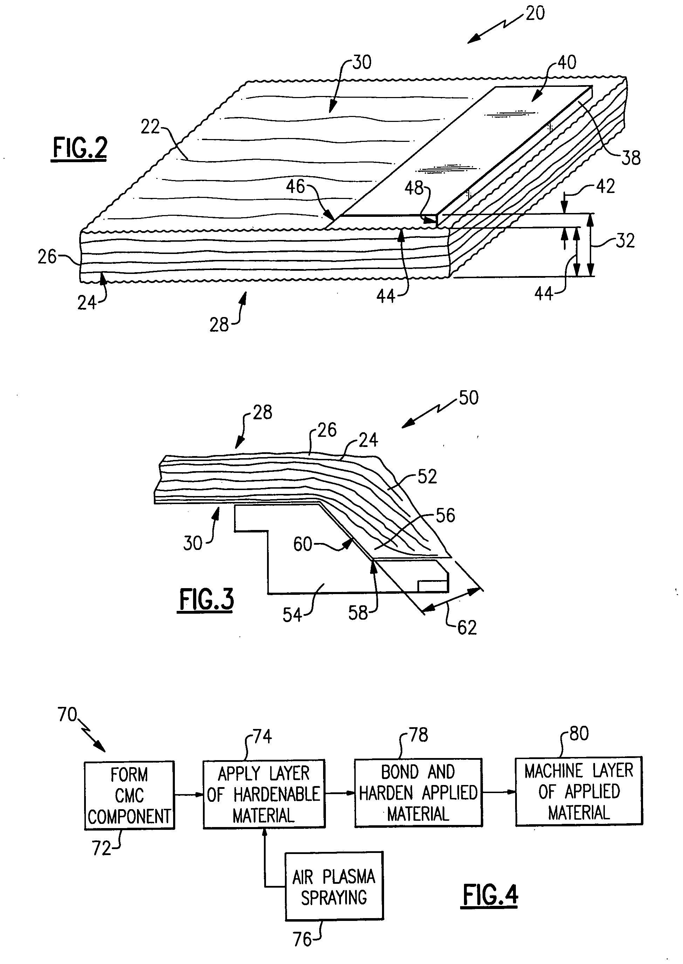

Referring to Figure 2, a disclosed example component 20 comprises a ceramic matrix composite (CMC) portion 22 comprised of reinforcement fibres 24 intermixed with a ceramic material 26. The example CMC material comprises a silicon carbide material produced by a chemical vapour infiltration process. The reinforcement fibres 24 provide an increased durability and strength that are desirable for many applications. The inclusion of the reinforcement fibres 24 also presents dimensional control limitations for the size and surface finish.

The reinforcement fibres 24 provide the increased strength and durability that is desired, but also inhibits significant machining or other secondary operations that could be implemented to accommodate limitations in dimensional control. Machining or any other cutting or material removal processes that are successfully utilized for other materials are of limited success for use with CMC materials. The example component includes a layer of hardenable material 38 that is bonded to a surface of the CMC 22. The example hardenable material 38 is comprised of silicon and can be machined to provide a desired dimension and surface finish.

The hardenable material includes at least one typical constituent of an environmental barrier coating (EBC). This includes at least one of silicon, refractory metal silicides, barium strontium aluminosilicate (BSAS), strontium aluminosilicate (SAS), yttrium silicates, rare earth silicates, mullite, hafnium oxide, tantalum oxide, hafnium silicate, zirconium silicate. The hardenable material may be reinforced with chopped fibres or hard or soft ceramic particles. The reinforcements might include carbides, graphite, carbon, glass, silicon carbide, silicon nitride or boron nitride.

The hardenable material may be applied by any method of coating application known in the art. These include plasma spraying techniques such as vacuum plasma spray (VPS) and air plasma spray (APS), physical vapour deposition methods such as electron-beam physical vapour deposition (EBPVD), slurry approaches and pack-cementation methods, chemical vapour deposition etc.

The process and material utilized to produce the CMC portion 22 result in a surface deviation of approximately +/- 0.004" (+/- 0.1016 mm) or greater. In this example, the silicon layer 38 is applied in areas where a more precise dimensional tolerance is desired. In this example the silicon layer 38 is applied to a portion of the component 20 where an overall thickness indicated at 32 is desired. Such a thickness may be required for areas of the component that must interface accurately with other members.

In this example, the component thickness 32 is formed from a first thickness 44 of the CMC 22 and a second thickness 42 that is formed from the silicon layer 38. The silicon layer 38 provides a surface that can be machined to desired tolerances. The silicon layer 38 provides a layer that is machinable without disturbing the matrix composition of the CMC 22.

The silicon layer 38 is applied in a non-solid form to a surface 30 of the CMC 22 and becomes solid upon cooling. The silicon layer 38 forms a bond to the surface 30 with a tensile strength substantially the same as the CMC 22. That is, the bond between the silicon layer 38 and the CMC 22 withstands tensile forces that are substantially the same as if the CMC 22 material were tested by itself. The bond 44 between the silicon layer 38 and the CMC 22 is therefore not a weak point in the component 20.

The silicon material layer 38 does not include continuous reinforcement fibres and therefore can be machined to provide a desired shape, thickness and surface finish. In the example component, a machined surface 40 of the silicon layer 38 includes a surface deviation that is much less than that of the surface deviation of the surface 30. Moreover, the example machined surface is machinable to a thickness within a desired tolerance range of +/- 0.002" (+/- 0.0508 mm) or better.

Machining of the layer 38 can be performed using any known machining process. As appreciated, a desired tolerance of a desired dimension will govern the specific machining process utilized. In the example component 20, the silicon layer 38 is machined using a diamond grinding operation to provide the desired thickness 32. The example machining process provides for the creation of a machine surface within a tolerance of +/- .002" (+/- 0.0508 mm) or better. Of course other machining processes and grinding operations are within the contemplation of this disclosure.

A CMC part is desirable for use in applications that encounter extreme temperatures. The thermal performance provided by CMC parts make it favourable for use shielding other less thermally resistant parts such as for example the combustor liner 18 (Figure 1). As appreciated, the combustor liner 18 encounters extreme temperatures on a hot side 28 that is exposed to hot gases produced during combustion as compared to a cold side 30 not directly exposed to the hot gases. The silicon layer 38 is applied to the cold side 30 such that it is not exposed to the temperature extremes encountered by the hot side 18.

Referring to Figure 3, another example component 50 is a part of a combustor and is exposed to the hot gas flow produced during combustion. As appreciated, although a combustor liner is disclosed, the component 50 could be utilized in any environment requiring a desired thermal performance. The example component 50 includes a CMC part 52 that is supported and held in place by a metal support member 54. An interface 58 between the metal support member 54 and the CMC part 52 is desired to include a specific geometry to facilitate support against flow forces and to accommodate thermal loading or other conditions that are encountered during operation.

The inconsistent fabrication process of forming the CMC part 52 may not provide consistent results within desired tolerance limits. Therefore, in this example, a silicon layer 56 is applied at the interface 58. The silicon layer 56 is applied as a layer to form a complete overall dimension greater than a desired final dimension, such as for example a desired thickness 62. The silicon layer 56 is then machined to provide the thickness 62 within acceptable tolerance limits. In this example, the silicon layer 56 forms a substantial part of the interface surface 60 that abuts the metal support 54. Moreover, as shown the silicon layer 56 itself varies in thickness to accommodate inconsistencies in the CMC 52 part.

Referring to Figure 4, the process of fabricating an example CMC component is schematically shown at 70 and includes the initial step of forming the CMC component as indicated at 72. Formation of the CMC can be accomplished by any known method. The example process utilizes a chemical vapour infiltration process that forms the ceramic matrix composite with the fibre reinforcement layers 24.

The example CMC is melt infiltrated silicon carbide/silicon carbide (MI SiC/SiC) which consists of a silicon carbide (SiC) fibre, a boron nitride (BN) fibre/matrix interface, and a silicon-silicon carbide (Si-SiC) matrix. Chemical vapour infiltration (CVI) is used to apply the BN interface, along with a SiC overcoat. Final densification of the matrix is completed by slurry cast (SC) and melt infiltration (MI) processes that result in a Si-SiC matrix. It should be understood that other methods and material known for producing a ceramic matrix composite material are within the contemplation of this disclosure.

Once the CMC part is complete, the surface deviation for specific areas of the component may not be as desired. Therefore a layer of hardenable silicon material is applied to a surface of the CMC part as is indicated at 74. The layer of silicon can be applied to localized areas that comprise an interface with other components, or to a larger general area to provide a desired surface finish better than that produced by the CMC formation process. The layer of silicon is therefore applied to locations of the CMC where the desired final dimensions are not consistently obtainable with the CMC process alone. In the disclosed examples, the silicon layers 38 (Figure 2) and 56 (Figure 3) are applied in areas that interface with other components, such as the support member 54.

The example application process includes an air plasma spraying process as is indicated at 76. In an air plasma spraying process, silicon is applied in a non solid form in the presence of heat. Layers of silicon are applied sequentially to build up a sufficient thickness to provide sufficient material for machining to a desired completed dimension. Other application processes as are known could also be utilized for applying a layer of hardenable material of sufficient desired thickness.

Once the hardenable material is applied, the hardenable material will bond to the CMC material and harden as is indicated at 78. The desired bond between the silicon material and the CMC material is such that desired mechanical properties of the completed part are maintained.

With the silicon applied, bonded and hardened, the silicon layer can then be machined to provide the desired dimensions as is indicated at 80. In the disclosed examples, the silicon layers 38 (Figure 2) and 56 (Figure 3) are machined to provide an interface with another component. The silicon layer 38 is machined to provide a desired overall thickness of the CMC component 20 within a desired tolerance. Further, edges of the silicon layer 38 can either be angled as indicated at 46 (Figure 2) or transverse as indicated at 48. Moreover, the silicon layer could also be machined to provide a specific geometry as is shown in Figure 3.

The example machining process includes a diamond grinding operation that provides a desired surface finish and dimensional tolerance. As appreciated, the specific machining operation utilized can be varied as required to generate a desired tolerance and geometry. Once the machining processes are complete, the CMC component provides the desired thermal properties combined with the desired geometry within desired dimensional tolerance range. Other machining processes including ultrasonic machining and grinding may be used to achieve the desired dimensional control.

The example process provides for the use of CMC components in an increased range of applications that require dimensional tolerances beyond those consistently obtained with CMC material fabrication processes.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of fabricating a ceramic matrix composite component comprising the steps of:
forming a ceramic matrix composite component into a desired shape including a fibre reinforced layer, wherein the ceramic matrix composite includes a first side configured for exposure to a first temperature and a second side configured for exposure to a second temperature less than the first temperature;
applying a layer of silicon material directly to a surface on the second side of the component, wherein the silicon material is bondable to the ceramic matrix composite, and wherein the layer of applied silicon material comprises an interface surface with a metal support member for mounting the ceramic matrix component; and
machining the layer of silicon material to provide a desired dimension of the ceramic matrix composite component at the interface with the metal support member.

2. The method as recited in claim 1, wherein the step of applying includes applying material in a form other than solid form that hardens into a solid form after application to the ceramic matrix component.

3. The method as recited in claim 2, including the step of hardening the material applied in a form other than solid into a solid form such that the hardenable material bonds to the ceramic matrix composite.

4. The method as recited in any preceding claim, wherein the layer of silicon is preferably air plasma sprayed onto the surface of the ceramic matrix composite.

5. The method as recited in any preceding claim, including the step of forming a desired dimension of the component by machining the layer of applied material to create the desired dimension, wherein the desired dimension includes a thickness of the ceramic matrix composite and the layer of applied material.

6. The method as recited in any preceding claim, wherein the layer of applied material comprises an interface surface for mounting the ceramic matrix component.

7. The method as recited in claim 6, wherein the applied layer of material is layered in a defined area on the ceramic matrix component forming a pad of the applied material.

8. The method as recited in any preceding claim, wherein the ceramic matrix composite comprises silicon carbon material.

9. The method as recited in any preceding claim, wherein the applied material is applied to one side of the ceramic matrix composite material.

10. The method as recited in any preceding claim, wherein the layer of applied material is formed to a thickness greater than a final finished thickness, and the machining step comprises the step of removing a portion of the applied material to form a desired thickness of the component, which desired thickness preferably comprises a thickness within a tolerance range less than a surface deviation of a surface of the ceramic matrix composite.

11. A ceramic matrix composite component formed by the method of any preceding claim and comprising:
a ceramic matrix composite material that forms a first portion of a desired completed component shape; and
a hardenable silicon material bonded directly to the ceramic matrix composite component forming a second portion of the desired completed component shape, the hardenable silicon material comprising a material different than the materials forming the ceramic matrix composite, wherein the component includes an interface surface for securing the component to a metal support, the hardenable silicon material comprising the interface surface for securing the component to the metal support.

12. The component as recited in claim 11, wherein the hardenable material comprises a surface finish having a surface deviation less than a surface finish of the ceramic matrix composite.

13. The component as recited in claim 11 or claim 12, wherein the bond between the hardenable material and the ceramic matrix composite is of a strength at least equal to that of the ceramic matrix composite.

14. A combustor for a gas turbine engine comprising:
a housing defining an inner cavity; and
a liner supported within the inner cavity, the liner including a ceramic matrix composite material that forms a first portion of a desired completed shape and a hardenable silicon material, different than the ceramic matrix composite material, bonded to the ceramic matrix component forming a second portion of the desired completed shape, wherein the layer of applied silicon material comprises an interface surface with a metal support member for mounting the ceramic matrix component, wherein the ceramic matrix composite material includes a hot side that is exposed to hot gases produced during combustion and a cold side not directly exposed to the hot gases, and the hardenable material is applied to a cold side of the ceramic matrix composite material.

15. The combustor as recited in claim 14, including a support structure for holding the liner within the inner cavity, the support structure including a surface in abutting contact with a surface of the liner including the hardenable material.

## Patentansprüche

1. Verfahren zum Herstellen einer Keramikmatrix-Verbundstoffkomponente, die folgenden Schritte umfassend:
Bilden einer Keramikmatrix-Verbundstoffkomponente zu einer gewünschten Form, die eine faserverstärkte Schicht beinhaltet, wobei der Keramikmatrix-Verbundstoff eine erste Seite, die zur Exposition gegenüber einer ersten Temperatur konfiguriert ist, und eine zweite Seite beinhaltet, die zur Exposition gegenüber einer zweiten Temperatur konfiguriert ist, die niedriger als die erste Temperatur ist;
Auftragen einer Schicht aus Siliziummaterial direkt auf eine Oberfläche auf der zweiten Seite der Komponente, wobei das Siliziummaterial mit dem Keramikmatrix-Verbundstoff verbindbar ist, und wobei die Schicht aus aufgetragenem Siliziummaterial eine Schnittstellenoberfläche mit einem Metallträgerelement zur Montage der Keramikmatrix-Komponente umfasst; und
Bearbeiten der Schicht aus Siliziummaterial, um eine gewünschte Abmessung der Keramikmatrix-Verbundstoffkomponente an der Schnittstelle mit dem Metallträgerelement bereitzustellen.

2. Verfahren nach Anspruch 1, wobei der Schritt des Auftragens das Auftragen von Material in einer anderen Form als fester Form beinhaltet, die sich nach Auftragen auf die Keramikmatrix-Komponente zu einer festen Form verhärtet.

3. Verfahren nach Anspruch 2, beinhaltend den Schritt des Verhärtens des in einer anderen Form als fest aufgetragenen Materials zu einer festen Form, sodass sich das verhärtbare Material mit dem Keramikmatrix-Verbundstoff verbindet.

4. Verfahren nach einem vorhergehenden Anspruch, wobei die Schicht aus Silizium bevorzugt Luftplasma ist, das auf die Oberfläche des Keramikmatrix-Verbundstoffes gesprüht wird.

5. Verfahren nach einem vorhergehenden Anspruch, beinhaltend den Schritt des Bildens einer gewünschten Abmessung der Komponente, indem die Schicht aus aufgetragenem Material bearbeitet wird, um die gewünschte Abmessung zu erzeugen, wobei die gewünschte Abmessung eine Dicke des Keramikmatrix-Verbundstoffes und der Schicht aus aufgetragenem Material beinhaltet.

6. Verfahren nach einem vorhergehenden Anspruch, wobei die Schicht aus aufgetragenem Material eine Schnittstellenoberfläche zum Montieren der Keramikmatrix-Komponente umfasst.

7. Verfahren nach Anspruch 6, wobei die aufgetragene Schicht aus Material in einem definierten Bereich der Keramikmatrix-Komponente geschichtet ist, der ein Kissen des aufgetragenen Materials bildet.

8. Verfahren nach einem vorhergehenden Anspruch, wobei der Keramikmatrix-Verbundstoff Siliziumkohlenstoffmaterial umfasst.

9. Verfahren nach einem vorhergehenden Anspruch, wobei das aufgetragene Material auf eine Seite des Keramikmatrix-Verbundstoffmaterials aufgetragen wird.

10. Verfahren nach einem vorhergehenden Anspruch, wobei die Schicht aus aufgetragenem Material zu einer Dicke gebildet wird, die größer als eine finale endverarbeitete Dicke ist, und der Bearbeitungsschritt den Schritt des Entfernens eines Abschnittes des aufgetragenen Materials umfasst, um eine gewünschte Dicke der Komponente zu bilden, wobei die gewünschte Dicke bevorzugt eine Dicke innerhalb einer Toleranzspanne umfasst, die weniger als eine Oberflächenabweichung einer Oberfläche des Keramikmatrix-Verbundstoffes ist.

11. Keramikmatrix-Verbundstoffkomponente, gebildet durch das Verfahren nach einem vorhergehenden Anspruch und umfassend:
ein Keramikmatrix-Verbundstoffmaterial, das einen ersten Abschnitt einer gewünschten abgeschlossenen Komponentenform bildet; und
ein verhärtbares Siliziummaterial, das direkt mit der Keramikmatrix-Verbundstoffkomponente verbunden ist, das einen zweiten Abschnitt der gewünschten abgeschlossenen Komponentenform bildet, wobei das verhärtbare Siliziummaterial ein Material umfasst, das sich von den Materialien unterscheidet, die den Keramikmatrix-Verbundstoff bilden, wobei die Komponente eine Schnittstellenoberfläche zum Befestigen der Komponente an einem Metallträger beinhaltet, wobei das verhärtbare Siliziummaterial die Schnittstellenoberfläche zum Befestigen der Komponente an dem Metallträger umfasst.

12. Komponente nach Anspruch 11, wobei das verhärtbare Material eine Oberflächenendverarbeitung umfasst, die eine Oberflächenabweichung von weniger als einer Oberflächenendverarbeitung des Keramikmatrix-Verbundstoffes aufweist.

13. Komponente nach Anspruch 11 oder Anspruch 12, wobei die Verbindung zwischen dem verhärtbaren Material und dem Keramikmatrix-Verbundstoff von einer Stärke ist, die zumindest gleich derjenigen des Keramikmatrix-Verbundstoffes ist.

14. Brennkammer für ein Gasturbinentriebwerk, umfassend:
ein Gehäuse, das einen Innenhohlraum definiert; und
eine Auskleidung, die innerhalb des Innenhohlraums getragen wird, wobei die Auskleidung ein Keramikmatrix-Verbundstoffmaterial, das einen ersten Abschnitt einer gewünschten abgeschlossenen Form bildet, und ein verhärtbares Siliziummaterial beinhaltet, das sich von dem Keramikmatrix-Verbundstoffmaterial unterscheidet, das mit der Keramikmatrix-Komponente verbunden ist, das einen zweiten Abschnitt der gewünschten abgeschlossenen Form bildet, wobei die Schicht aus aufgetragenem Siliziummaterial eine Schnittstellenoberfläche mit einem Metallträgerelement zum Montieren der Keramikmatrix-Komponente umfasst, wobei das Keramikmatrix-Verbundstoffmaterial eine heiße Seite, die heißen Gasen ausgesetzt ist, die während der Verbrennung erzeugt werden, und eine kalte Seite beinhaltet, die den heißen Gasen nicht direkt ausgesetzt ist, und das verhärtbare Material auf eine kalte Seite des Keramikmatrix-Verbundstoffmaterials aufgetragen wird.

15. Brennkammer nach Anspruch 14, beinhaltend eine Trägerstruktur zum Halten der Auskleidung innerhalb des Innenhohlraums, wobei die Trägerstruktur eine Oberfläche in Stoßkontakt mit einer Oberfläche der Auskleidung beinhaltet, die das verhärtbare Material beinhaltet.

## Revendications

1. Procédé de fabrication d'un composant composite de matrice céramique comprenant les étapes :
de formation d'un composant composite de matrice céramique en une forme souhaitée comportant une couche renforcée de fibres, dans lequel le composite de matrice céramique comporte un premier côté configuré pour une exposition à une première température et un second côté configuré pour une exposition à une seconde température inférieure à la première température ;
d'application d'une couche de matériau de silicium directement sur une surface sur le second côté du composant, dans lequel le matériau de silicium peut être lié au composite de matrice céramique, et dans lequel la couche de matériau de silicium appliqué comprend une surface d'interface avec un élément de support métallique pour monter le composant de matrice céramique ; et
d'usinage de la couche de matériau de silicium pour fournir une dimension souhaitée du composant composite de matrice céramique au niveau de l'interface avec l'élément de support métallique.

2. Procédé selon la revendication 1, dans lequel l'étape d'application comporte l'application d'un matériau sous une forme autre qu'une forme solide qui durcit en une forme solide après l'application sur le composant de matrice céramique.

3. Procédé selon la revendication 2, comportant l'étape de durcissement du matériau appliqué sous une forme autre que solide en une forme solide de sorte que le matériau durcissable se lie au composite de matrice céramique.

4. Procédé selon une quelconque revendication précédente, dans lequel la couche de silicium est de préférence du plasma d'air pulvérisé sur la surface du composite de matrice céramique.

5. Procédé selon une quelconque revendication précédente, comportant l'étape de formation d'une dimension souhaitée du composant en usinant la couche de matériau appliqué pour créer la dimension souhaitée, dans lequel la dimension souhaitée comporte une épaisseur du composite de matrice céramique et de la couche de matériau appliqué.

6. Procédé selon une quelconque revendication précédente, dans lequel la couche de matériau appliqué comprend une surface d'interface pour monter le composant de matrice céramique.

7. Procédé selon la revendication 6, dans lequel la couche appliquée de matériau est stratifiée dans une zone définie sur le composant de matrice céramique formant un tampon du matériau appliqué.

8. Procédé selon une quelconque revendication précédente, dans lequel le composite de matrice céramique comprend un matériau au silicium-carbone.

9. Procédé selon une quelconque revendication précédente, dans lequel le matériau appliqué est appliqué sur un côté du matériau composite de matrice céramique.

10. Procédé selon une quelconque revendication précédente, dans lequel la couche de matériau appliqué est formée à une épaisseur supérieure à une épaisseur finie finale, et l'étape d'usinage comprend l'étape de retrait d'une partie du matériau appliqué pour former une épaisseur souhaitée du composant, laquelle épaisseur souhaitée comprend de préférence une épaisseur dans une plage de tolérance inférieure à un écart de surface d'une surface du composite de matrice céramique.

11. Composant composite de matrice céramique formé par le procédé selon une quelconque revendication précédente et comprenant :
un matériau composite de matrice céramique qui forme une première partie d'une forme de composant terminée souhaitée ; et
un matériau de silicium durcissable lié directement au composant composite de matrice céramique formant une seconde partie de la forme de composant terminée souhaitée, le matériau de silicium durcissable comprenant un matériau différent des matériaux formant le composite de matrice céramique, dans lequel le composant comporte une surface d'interface pour fixer le composant à un support métallique, le matériau de silicium durcissable comprenant la surface d'interface pour fixer le composant au support métallique.

12. Composant selon la revendication 11, dans lequel le matériau durcissable comprend une finition de surface ayant un écart de surface inférieur à une finition de surface du composite de matrice céramique.

13. Composant selon la revendication 11 ou la revendication 12, dans lequel la liaison entre le matériau durcissable et le composite de matrice céramique a une résistance au moins égale à celle du composite de matrice céramique.

14. Chambre de combustion pour un moteur à turbine à gaz comprenant :
un boîtier définissant une cavité intérieure ; et
une chemise supportée à l'intérieur de la cavité intérieure, la chemise comportant un matériau composite de matrice céramique qui forme une première partie d'une forme terminée souhaitée et un matériau de silicium durcissable, différent du matériau composite de matrice céramique, lié au composant de matrice céramique formant une seconde partie de la forme terminée souhaitée, dans laquelle la couche de matériau de silicium appliqué comprend une surface d'interface avec un élément de support métallique pour monter le composant de matrice céramique, dans laquelle le matériau composite de matrice céramique comporte un côté chaud qui est exposé aux gaz chauds produits pendant la combustion et un côté froid non directement exposé aux gaz chauds, et le matériau durcissable est appliqué sur un côté froid du matériau composite de matrice céramique.

15. Chambre de combustion selon la revendication 14, comportant une structure de support pour maintenir la chemise à l'intérieur de la cavité intérieure, la structure de support comportant une surface en contact de butée avec une surface de la chemise comportant le matériau durcissable.
